# EUROPÄISCHE PATENTSCHRIFT

(11) **EP 1 694 545 B1**
(45) Veröffentlichungstag und Bekanntmachung des Hinweises auf die Patenterteilung: **20.02.2008**
(21) Anmeldenummer: 04817569.9
(22) Anmeldetag: 08.12.2004
(51) Int. Cl.: B60T 8/48, B60T 8/38, B60T 8/24, B60T 11/20, B60T 17/18

(54) **VERFAHREN UND VORRICHTUNG ZUR REGELUNG EINES KRAFTFAHRZEUGES MIT EINER ELEKTRISCH GEREGELTEN BREMSANLAGE MIT FAHRDYNAMIKREGELUNG**
METHOD AND DEVICE FOR CONTROLLING A MOTOR VEHICLE COMPRISING AN ELECTRICALLY CONTROLLED BRAKING SYSTEM PROVIDED WITH A DRIVER DYNAMIC CONTROL
PROCEDE DE REGULATION D'UN VEHICULE COMPORTANT UN SYSTEME DE FREINAGE REGULE ELECTRIQUEMENT A REGULATION DYNAMIQUE

(30) Priorität: 09.12.2003 DE 10357385; 06.12.2004 DE 102004058875
(43) Veröffentlichungstag der Anmeldung: 30.08.2006
(73) Patentinhaber: Continental Teves AG & Co. oHG, 60488 Frankfurt am Main (DE)
(72) Erfinder: SCHONLAU, Jürgen, 65396 Walluf (DE); RÜFFER, Manfred, 65843 Sulzbach (DE); MERKEL, Dieter, 64285 Darmstadt (DE); KUGLAND, Oliver, 65817 Eppstein (DE); QUEISSER, Torsten, 60439 Frankfurt (DE); VOIGTMANN, Thomas, 61381 Friedrichsdorf-Köppern (DE)
(86) Internationale Anmeldenummer: PCT/EP2004/053344
(87) Internationale Veröffentlichungsnummer: WO 2005/056359

(56) Entgegenhaltungen:
- EP-A- 0 509 240
- WO-A-02/36400
- WO-A-02/066307
- WO-A-20/04035362
- DE-A1- 19 622 545
- US-A1- 2003 000 375

## Beschreibung

Die Erfindung betrifft ein Verfahren und eine Vorrichtung zur Regelung eines Kraftfahrzeuges mit einer elektronisch geregelten Bremsanlage mit Fahrdynamikregelung, mit einem mittels eines Bremspedals betätigbaren Hauptbremszylinder, mit mindestens einer durch eine elektronische Steuer- und Regeleinheit ansteuerbaren Druckmittelfördervorrichtung, mit deren Druck Radbremsen des Fahrzeuges beaufschlagbar sind, die über mindestens eine mittels eines Trennventils absperrbare hydraulische Verbindung andererseits mit dem Hauptbremszylinder verbindbar sind, mit je einem den Radbremsen vorgeschalteten Einlassventil und einem Auslassventil, sowie mit einer Einrichtung zur Erkennung einer Bremsbetätigung, welche einen Magneten als Signalgeber und ein Sensorelement umfasst.

Bei grundsätzlich bekannten Fahrdynamikregelungssystemen führt ein Fahrdynamikregelungsvorgang regelmäßig dazu, dass eine normalerweise ständig geöffnete hydraulische Verbindung zwischen Hauptzylinder und Radbremsen automatisch unterbrochen wird, so dass ein oder beide Kolben des Hauptzylinders bei Bremsvorgängen während des Fahrdynamikregelungsvorgangs (ESP-Regeleingriff) oder während eines ABS-Eingriffes infolge geschlossener Trennventile relativ zu dem Gehäuse gewissermaßen unverschiebbar ist. Eine Ursache dafür ist, dass kein Druckmittel in Richtung Radbremsen verdrängt werden kann. Der ESP-Regeleingriff erfolgt fahrerunabhängig und der rudimentäre Kolbenweg reicht nicht aus, um eine Wegänderung anzuzeigen. Der ESP-Vorgang kann auch nicht durch den Fahrer unterbrochen werden, so dass nur eine eingeschränkte Verzögerung möglich ist. Weiterhin ist kein Betätigungssignal generierbar und es kann beispielsweise keine Bremslichtsignalisierung erfolgen. Der rückwärtige Verkehr wird erst nach Abschluss des Fahrdynamikregelungsvorgangs von dem Bremswunsch des Fahrers in Kenntnis gesetzt.

Weiter ist es ein erklärtes Ziel, Unfälle zu vermeiden und Unfallfolgen zu minimieren. Hierzu werden passive und aktive Sicherheitssysteme miteinander vernetzt, um einen Datenaustausch unter den Sicherheitssystemen zu erzielen und um somit Informationen über den Fahrzeugzustand, das Fahrzeugumfeld und den Fahrer selbst zur Verfügung zu stellen.

Es gilt daher ein Verfahren und eine in bezug auf den Aufbau einfache Vorrichtung für die Problematik anzubieten, auch während eines Fahrdynamikregelungsvorganges eine zuverlässige Überwachung eines Kolbens zur ermöglichen und den Fahrerwunsch über den gesamten Betätigungsweg zu erkennen, um Fahrzeugregelungsvorgänge durch Erkennen des Fahrerwunsches zu optimieren.

Zur Lösung dieser Aufgabe wird ein Verfahren vorgeschlagen, dessen Besonderheit darin besteht, dass das Sensorelement bei einer Kolbenbewegung des Hauptzylinders eine Magnetfeldänderung erfasst und ein digitales Signal und ein analoges Signal ausgibt, dass die beiden Signale an eine elektronische Steuer- und Regeleinheit weitergeleitet werden und dass die beiden Signale in der elektronischen Steuer- und Regeleinheit ausgewertet werden. Dadurch liegt im Normalbetrieb eine gewisse Redundanz der Signale vor. Die Auswertung des analogen Signals ermöglicht es, die Bremspedalbewegung und den Zustand des Bremspedals (Betätigungs-, Halte- oder Lösungszustand) zu sensieren, d.h. es wird nicht nur sensiert, ob sich das Bremspedal bzw. der damit verbundene Kolben bewegt und wo sich der Kolben relativ zu dem Gehäuse befindet, sondern es kann eine qualitative Aussage über die Bewegung, wie beispielsweise die Geschwindigkeit oder die Bewegungsrichtung des Bremspedals, getroffen werden.

Zusätzlich ist es durch das erfindungsgemäße Verfahren möglich, ein Anschlagen des zweiten Kolbens an dem Gehäuse zu erkennen. Die Steuer- und Regeleinheit steuert in diesem Fall eine Pumpe an, welche zusätzliches Druckmittelvolumen zuschaltet und dieses in Richtung Radbremsen verdrängt. Diese Sensierung des Kolbenanschlages ermöglicht es, das Hauptzylinder-Volumen kleiner als bei bekannten Hauptzylindern auszulegen, wodurch eine Verkürzung der Hauptzylinderbaulänge und damit eine Verkürzung des Pedalweges ohne Komfort- und Funktionseinbußen erzielt wird. Dadurch wird das Verhalten in Crash-Situationen verbessert.

Weiter können Regelfälle, wie beispielsweise ESP - Eingriffe, in den Bremsvorgang, durch die Fahrerwunscherkennung optimiert werden.

Da das digitale Signal störunanfälliger ist, wird dieses vorzugsweise bei einer Bremsbetätigung vorrangig ausgewertet, wenn im Fahrzeug kein Fahrdynamikregelungsvorgang abgewickelt wird.

Wird jedoch eine Bremsbetätigung während eines Fahrdynamikregelungsvorganges erfasst, wird das analoge Signal vorrangig ausgewertet, da der Kolben feststeht bzw. sich nur minimal bewegt. Der Fahrerwunsch kann somit auch während eines ESP-Regeleingriffes erkannt werden, da mit dem analogen Signal minimale Signalschwankungen, d.h. minimale Magnetfeldänderungen erkennbar sind.

Um eine Panikbremsung des Fahrers zu erkennen, kann mittels des analogen Signals die Betätigungsgeschwindigkeit des Bremspedals ermittelt werden, wodurch mittels der elektronischen Steuer-und Regeleinheit entsprechende Regelungsvorgänge eingesteuert werden können.

Weiter ist es gemäß einer vorteilhaften Weiterbildung möglich, dass mittels des analogen Signals ein theoretischer Druck in der hydraulischen Verbindung ermittelt wird, welcher mit einem mittels eines Drucksensors gemessenen Druck verglichen wird, um Lufteinschlüsse in der Bremsanlage zu erkennen.

Eine Signalverarbeitung des analogen Signals, beispielsweise eine Signalverstärkung, kann gemäß einer vorteilhaften Ausführungsform der Erfindung im Sensorelement erfolgen. Jedoch ist eine Verarbeitung des analogen Signals ebenfalls in der Steuer-und Regeleinheit denkbar.

Eine Vorrichtung zur Durchführung dieses Verfahrens besteht erfindungsgemäß darin, dass in dem Sensorelement ein erster Hall-IC und ein zweiter Hall-IC vorgesehen sind, wobei der erste Hall-IC das digitale Signal und der zweite Hall-IC das analoge Signal liefert. Dabei ist das Sensorelement an einem Gehäuse des Hauptzylinders angeordnet vorgesehen. Es wird ein relativ einfach aufgebautes, berührungsloses Konzept ohne Verschleißerscheinungen über die gesamte Lebensdauer vorgeschlagen, wobei gleichzeitig der Bauraum des Hauptzylinders optimiert werden kann.

In vorteilhafter Ausgestaltung ist der Magnet auf einem Kolben des Hauptzylinders angeordnet, wobei der Kolben zur Anordnung des Magneten einen ersten zylindrischen, zapfenförmigen Kolbenabschnitt aufweist, welcher ohne größeren Aufwand bei der Herstellung des Kolbens an diesen angeformt werden kann. Der Magnet, welcher beispielsweise als Ringmagnet ausgebildet ist, kann somit mit einfachen Mitteln auf dem Kolben zentriert angeordnet werden. Es ist daher nicht notwendig, den Kolben in einer bestimmten Lage in das Gehäuse zu montieren, wodurch eine Verdrehsicherung des Kolbens entfallen und wodurch das Sensorelement theoretisch in einer beliebigen Position am Umfang des Gehäuses angeordnet werden kann.

Vorzugsweise weist der Kolben einen zweiten zylindrischen, zapfenförmigen Kolbenabschnitt auf und eine ringförmige Scheibe ist zur Positionierung des Magneten und zur Abstützung einer mit dem ersten Kolben verbundenen Hülse auf dem zweiten zylindrischen, zapfenförmigen Abschnitt vorgesehen. Dadurch kann der Kolben mit dem Magneten als vormontierbare Baugruppe vorgesehen werden.

Eine einfache Herstellbarkeit der Kolben-Magnet-Baugruppe wird dadurch erreicht, indem die ringförmige Scheibe mittels Umformen des zweiten zylindrischen, zapfenförmigen Kolbenabschnittes auf dem zweiten zylindrischen, zapfenförmigen Abschnitt befestigbar ist.

Die Zeichnung zeigt eine vorteilhafte Ausgestaltung der erfindungsgemäßen Vorrichtung im Schnitt, welche nachstehend im Einzelnen beschrieben wird.

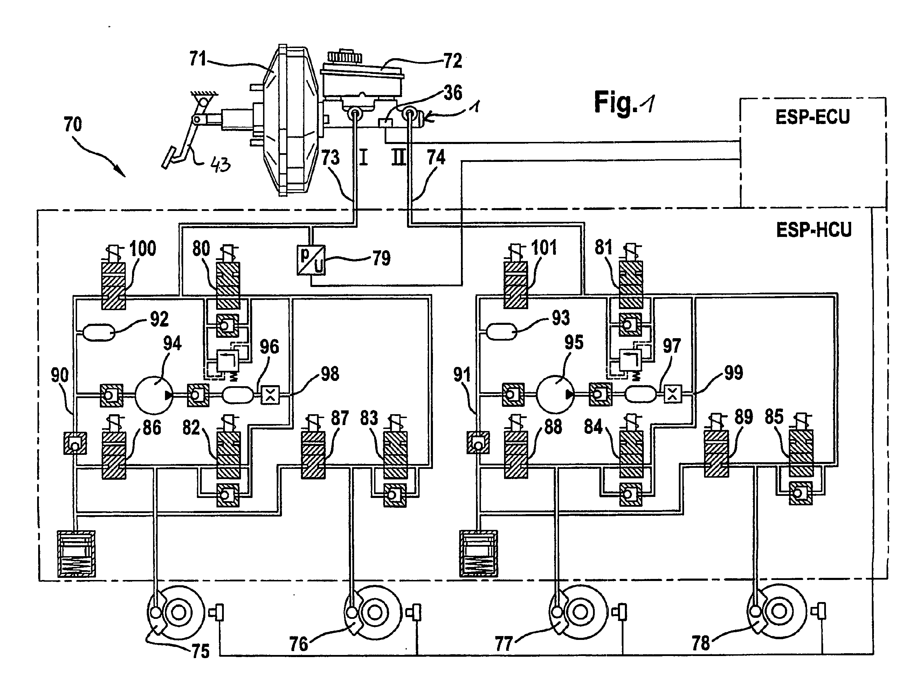

Die Fig. 1 dient zur Erläuterung einer elektronisch geregelten Bremsanlage 70 mit Fahrdynamikregelung (ESP). Die Bremsanlage 70 umfasst ein Bremsgerät mit einem pneumatischen Bremskraftverstärker 71, einen pedalbetätigbaren Hauptzylinder 1 mit einem Druckmittelvorratsbehälter 72, wobei Druckräumen des Hauptzylinders 1 über Bremsleitungen 73,74 mit Radbremsen 75-78 verbunden sind. Die Radbremsen 75-78 sind paarweise in sogenannten Bremskreisen I, II zusammengefasst. Bei den Bremskreisen I,II hat sich die sogenannte Diagonalaufteilung unter Zusammenfassung von diagonal gegenüberliegenden Radbremsen der Vorderachse und Hinterachse eines Fahrzeugs durchgesetzt, wobei prinzipiell auch andere Aufteilung wie beispielsweise die sogenannte Schwarz/Weiß Aufteilung unter paarweiser Kombination der Radbremsen einer Achse möglich ist.

Zur Erfassung eines fahrerseitig eingesteuerten Drucks dient ein Drucksensor 79 an der Bremsleitung 73, welche eine Druckkammer mit den Radbremsen 75,76 von Bremskreis I verbindet. Jede Bremsleitung 73,74 weist in Reihenschaltung elektromagnetische Trennventile 80,81 sowie für jede Radbremse 75-78 jeweils ein Einlassventil 82-85 sowie jeweils ein Auslassventil 86-89 auf. Die beiden Radbremsen 75,76;77,78 eines jeden Bremskreises I, II sind mit einer Rücklaufleitung 90,91 verbunden, in deren Leitungsabzweige pro Radbremse 75-78 jeweils das Auslassventil 86-89 eingesetzt ist. Stromabwärts zu den Auslassventilen 86-89 befindet sich in jeder Rücklaufleitung 90,91 ein Niederdruckspeicher 92,93 der mit einem Eingang einer elektromotorisch angetriebenen Druckmittelfördervorrichtung 94,95 verbunden ist, welche die beiden Bremskreise I,II speist. Zwischen einem Ausgang jeder Druckmittelfördervorrichtung 94,95 und dem zugehörigen Bremskreis I, II besteht mittels Druckkanal 96,97 und einem Abzweig 98,99 eine hydraulische Verbindung, wobei die Druckerhöhung in den Radbremsen 75-78 über die Einlassventile 82-85 regelbar ist. Dadurch ist über die Druckmittelfördervorrichtungen 94,95 Druck zwecks Fahrstabilitätseingriffen oder zum Bremsen in den Radbremsen 75-78 einsteuerbar, ohne auf einen zentralen Hochdruckspeicher wie bei elektrohydraulischen Bremsanlagen zurückgreifen zu müssen.

Um einen Wechsel zwischen ABS-Rückförderbetrieb (Förderrichtung in Richtung Hauptbremszylinder 1) und ASR oder ESP-Fahrdynamikregelungsbetrieb (Förderrichtung in Richtung Radbremsen) mittels der Druckmittelfördervorrichtungen 94,95 zu ermöglichen, ist im Ansaugzweig jeder Druckmittelfördervorrichtung 94,95 jeweils ein Umschaltventil 100,101 integriert, welches bei aktiver Fahrdynamikregelung eine Druckmittelverbindung zwischen dem Hauptzylinder 1 und dem Eingang der Druckmittelfördervorrichtungen 94,95 herzustellen vermag.

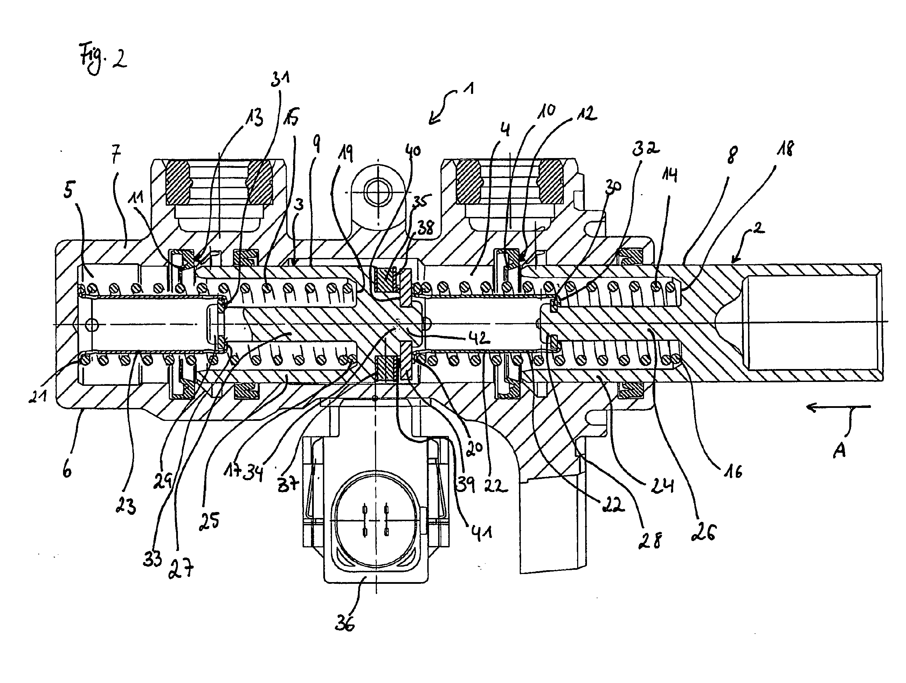

Fig. 2 zeigt den Hauptzylinder 1 mit einem ersten und einem zweiten Kolben 2,3 für erste und zweite Druckräume 4,5, wobei die Kolben 2,3 zur Druckmittelversorgung von den Radbremsen 75-78 verschiebbar innerhalb einem Gehäuse 6 angeordnet sind. Ein in Fig. 1 dargestelltes Bremspedal 43 ist mittelbar oder unmittelbar mit dem ersten Kolben 2 verbunden.

Der Hauptzylinder 1 ist vom sogenannten Plunger-Typ mit ortsfest in einer Gehäusewandung 7 angeordneten, und an einer Kolbenwandung 8,9 mit einer Dichtlippe 10,11 anliegenden Dichtmanschetten 12,13 zur Abdichtung der Druckräume 4,5. Die Dichtlippen 10,11 können in Richtung Radbremse überströmt werden, falls ein Druckgefälle zwischen nicht gezeichnetem Druckmittelvorratsbehälter und Radbremse eingestellt wird. Für den unbetätigten Betriebszustand wird ferner zwischen den beiden Druckräumen 4,5 eine druckausgleichende Verbindung ermöglicht, so dass für diesen unbetätigten Betriebszustand auch zwischen den beiden Bremskreisen ein genereller Druckausgleich besteht.

Jedem der Kolben 2,3 ist eine Rückstellfeder 14,15 zugeordnet, welche mit einem Ende 16,17 an einem Kolbenboden 18,19 und mit einem anderen Ende über einen Kragen 20,21 einer Hülse 22,23 mittelbar am Gehäuse 6 abgestützt ist. Die Rückstellfeder 14,15 wird bei Kolbenverschiebung in eine Betätigungsrichtung A komprimiert, und zwecks Kolbenrückstellung expandiert.

Ausgehend von dem Kolbenboden 18,19 verfügen die Kolben 2,3 über eine topfförmige Wandung 24,25, innerhalb derer die Rückstellfeder 14,15 zumindest teilweise angeordnet ist. Die Wandung 24,25 wird mittig von einem zentrischen Zapfen 26,27 durchragt, der vor seinem axialen Austritt aus der Wandung 24,25 endet. Dieses Ende 28,29 ist mit einem Anschlag 30,31 für die Hülse 22,23 versehen, der mit einem Kragen 32,33 derart zusammenwirkt, dass die Hülse 22,23 relativ zu dem Zapfen 26,27 begrenzt teleskopierbar ist. Mit anderen Worten wird die Hülse 22,23 mit Rückstellfeder 14,15 bei Betätigung in das Kolbeninnere gedrängt. Wie zu ersehen ist, handelt es sich bei dem Anschlag 30,31 vorzugsweise um eine, an den Zapfen 26,27 angenietete - insbesondere Taumelvernietete - Ringscheibe. Das anderseitige Ende der Hülse 22,23 verfügt über den tellerartigen Kragen 20,21 zur Anlage der Rückstellfeder 14,15.

Der zweite Kolben 3 verfügt zusätzlich über einen ersten, dem Zapfen 27 entgegengerichteten zylindrischen, zapfenförmigen Kolbenabschnitt 34 und einen zweiten zylindrischen, zapfenförmigen Kolbenabschnitt 42, wobei auf dem ersten Kolbenabschnitt 34 ein Permanent-Magnet 35 angeordnet ist.

Eine Einrichtung zur Erkennung einer Bremsbetätigung umfasst den Magneten 35 als Signalgeber und ein Sensorelement 36, wobei der Magnet 35 ein Magnetfeld radial in Richtung des Sensorelementes 36 aussendet, das ortsfest am Gehäuse 6 vorgesehen ist, und mit einer nicht gezeichneten elektronischen Steuer- und Regeleinheit verbindbar ist, um eine Lageerfassung zu ermöglichen.

Der Magnet 35 ist ringförmig und wie ersichtlich zwischen Scheiben 37,38, sogenannten Polscheiben, aus magnetischem Werkstoff angeordnet. Die Scheiben 37,38 ermöglichen eine Bündelung des magnetischen Feldes, so dass die Wandstärke des Gehäuses 6 ausreichend dick ausgeführt sein kann, um auch Hochdruckbeanspruchung zu widerstehen. Gleichzeitig wird die Krafteinwirkung auf den Magneten 35 homogenisiert, indem diese auf eine größere Fläche verteilt wird, und der Magnet 35 wird im Falle eines Bruches durch die Scheiben 37,38 zusammengehalten.

Wie aus Fig. 2 hervorgeht, ist auf dem zweiten zylindrischen, zapfenförmigen Kolbenabschnitt 42 eine ringförmige Scheibe 39 angeordnet, welche der Positionierung des Magneten 35 und der Abstützung der Hülse 22 dient. Die Scheibe 39, welche an einer zwischen dem ersten und dem zweiten Kolbenabschnitt 34,42 ausgebildeten Stufe 40 anliegt, ist durch Umformen des zweiten zylindrischen, zapfenförmigen Abschnittes 42, insbesondere durch Taumelvernieten, befestigt.

Zwischen dem Magneten 35 bzw. der Polscheibe 38 und der Scheibe 39 ist ein elastisches Element 41 beispielsweise in Form eines O-Ringes vorgesehen, welches bei der Befestigung der Scheibe 39 deformiert, d.h. zusammengedrückt wird und somit den Magneten 35 und die Polscheiben 37,38 in Anlage mit der Wandung 25 hält.

In dem Sensorelement 36 sind ein nicht dargestellter erster und ein nichtdargestellter zweiter Hall-IC vorgesehen, wobei der erste Hall-IC ein digitales Signal und der zweite Hall-IC ein analoges Signal liefert. Dadurch liegt im Normalbetrieb eine gewisse Redundanz der Signale vor.

Wird der erste Kolben 2 über das nicht dargestellte Bremspedal in Betätigungsrichtung A verschoben, werden der zweite Kolben 3 sowie der Magnet 35 bei einer Normalbremsung aufgrund der Federkräfte parallel zu diesem verschoben. Das Sensorelement 36 sensiert dabei eine Magnetfeldänderung und der erste und der zweite Hall-IC stellen ein digitales und analoges Signal zur Verfügung.

Das digitale Signal erkennt einen definierten Schwellenwert des magnetischen Feldes und ist daher als gesteuerter Schalter lediglich als Öffner oder Schließer eines Stromkreises wirksam. Das analoge Signal, welches im Sensorelement 36 oder in einer elektronischen Steuer- und Regeleinheit verarbeitet - d.h. beispielsweise verstärkt - werden kann, liefert eine Aussage über die Bremspedalbewegung bzw. den Zustand des Bremspedals (Betätigungs-, Halte- oder Lösungszustand).

Diese beiden Signale werden an eine elektronische Steuer-und Regeleinheit, wie beispielweise an eine Motorsteuerung oder an eine Bordnetzsteuerung, weitergeleitet und darin ausgewertet, wodurch beispielsweise ein Bremslicht angesteuert oder ein Tempomat ausgeschaltet werden kann.

Da das digitale Signal störunanfälliger ist, wird dieses im Normalbetrieb, d.h. wenn kein Regeleingriff - beispielsweise ESP oder ABS - stattfindet, vorrangig ausgewertet.

Die Plausibilisierung der Signale ist in der Software der elektronischen Steuer- und Regeleinheit festlegbar, d.h. diese Plausibilisierung ist nicht zwingend und es ist ebenso möglich, im Normalbetrieb vorrangig das analoge Signal auszuwerten.

Bei einem ESP-Regeleingriff, bei dem beispielsweise der zweite Kolben 3 trotz einer Betätigung des Bremspedals 43 feststeht bzw. sich nur minimal bewegt, da lediglich ein Leerweg des Hauptzylinders 1 durchfahren wird, wird vorrangig das analoge Signal ausgewertet, weil die minimale Bewegung des zweiten Kolbens 3 eventuell nicht ausreicht, um ein digitales Signal im ersten Hall-IC zu erzeugen.

Der Fahrerwunsch kann also auch während eines ESP-Regeleingriffes erkannt werden, da mit dem zweiten Hall-IC minimale Signalschwankungen, d.h. minimale Magnetfeldänderungen erkennbar sind.

Das bedeutet, dass in jedem Fall, d.h. auch im Falle eines ESP-Regeleingriffes, erkannt werden kann, mit welcher Geschwindigkeit der Fahrer das Bremspedal 43 betätigt. Dadurch kann eine Panikbremsung erkannt und durch die elektronische Steuer- und Regeleinheit können entsprechende Regelungsvorgänge eingesteuert werden. Beispielsweise ist es hierdurch möglich, einen elektronisch gesteuerten pneumatischen Bremskraftverstärker anzusteuern.

Weiter ist es möglich, durch die Auswertung des analogen Signals Lufteinschlüsse in der Bremsanlage zu erkennen. Hierzu wird mittels des analogen Signals ein theoretischer Druck in der hydraulischen Verbindung 73 ermittelt, welcher mit dem gemessenen Druck des Drucksensors 79 verglichen wird.

Um Unfälle zu vermeiden und Unfallfolgen zu mindern, ist es grundsätzlich möglich, die beiden Signale einem sogenannten Gefahrenrechner zur Verfügung zu stellen, in welchem Daten von verschiedenen passiven und aktiven Sicherheitssystemen, wie ESP, Bremsassistent, Adaptive Cruise Control (ACC), Gurtstraffer, Airbags etc., zusammenlaufen und ausgewertet werden. Abhängig vom Grad des Gefahrenpotentials können dann beispielsweise Informationen und Warnungen für den Fahrer ausgegeben oder weitergehende Sicherheitsmaßnahmen eingeleitet werden.

### Bezugszeichenliste

- 1: Hauptzylinder
- 2: Kolben
- 3: Kolben
- 4: Druckraum
- 5: Druckraum
- 6: Gehäuse
- 7: Gehäusewandung
- 8: Kolbenwandung
- 9: Kolbenwandung
- 10: Dichtlippe
- 11: Dichtlippe
- 12: Dichtmanschette
- 13: Dichtmanschette
- 14: Rückstellfeder
- 15: Rückstellfeder
- 16: Ende
- 17: Ende
- 18: Kolbenboden
- 19: Kolbenboden
- 20: Kragen
- 21: Kragen
- 22: Hülse
- 23: Hülse
- 24: Wandung
- 25: Wandung
- 26: Zapfen
- 27: Zapfen
- 28: Ende
- 29: Ende
- 30: Anschlag
- 31: Anschlag
- 32: Kragen
- 33: Kragen
- 34: Kolbenabschnitt
- 35: Magnet
- 36: Sensorelement
- 37: Scheibe
- 38: Scheibe
- 39: Scheibe
- 40: Stufe
- 41: Element
- 42: Kolbenabschnitt
- 43: Bremspedal

- 70: Bremsanlage
- 71: Bremskraftverstärker
- 72: Druckmittelvorratsbehälter
- 73: Bremsleitung
- 74: Bremsleitung
- 75: Radbremse
- 76: Radbremse
- 77: Radbremse
- 78: Radbremse
- 79: Drucksensor
- 80: Trennventil
- 81: Trennventil
- 82: Einlassventil
- 83: Einlassventil
- 84: Einlassventil
- 85: Einlassventil
- 86: Auslassventil
- 87: Auslassventil
- 88: Auslassventil
- 89: Auslassventil
- 90: Rücklaufleitung
- 91: Rücklaufleitung
- 92: Niederdruckspeicher
- 93: Niederdruckspeicher
- 94: Druckmittelfördervorrichtung
- 95: Druckmittelfördervorrichtung
- 96: Druckkanal
- 97: Druckkanal
- 98: Abzweig
- 99: Abzweig
- 100: Umschaltventil
- 101: Umschaltventil

- A: Betätigungsrichtung
- I: Bremskreis
- II: Bremskreis

## Patentansprüche

1. Verfahren zur Regelung eines Kraftfahrzeuges mit einer elektronisch geregelten Bremsanlage mit Fahrdynamikregelung, mit einem mittels eines Bremspedals (43) betätigbaren Hauptbremszylinder (1), mit mindestens einer durch eine elektronische Steuer- und Regeleinheit ansteuerbaren Druckmittelfördervorrichtung (94,95), mit deren Druck Radbremsen (75,76,77,78) des Fahrzeuges beaufschlagbar sind, die über mindestens eine mittels eines Trennventils (80,81) absperrbare hydraulische Verbindung (73,74) andererseits mit dem Hauptbremszylinder (1) verbindbar sind, mit je einem den Radbremsen (75,76,77,78) vorgeschalteten Einlassventil (82,83,84,85) und einem Auslassventil (86,87,88,89), sowie mit einer Einrichtung zur Erkennung einer Bremsbetätigung, welche einen Magneten (35) als Signalgeber und ein Sensorelement (36) umfasst, **dadurch gekennzeichnet, dass**
- das Sensorelement (36) bei einer Kolbenbewegung des Hauptzylinders (1) eine Magnetfeldänderung erfasst und ein digitales Signal und ein analoges Signal ausgibt,
- die beiden Signale an eine elektronische Steuer- und Regeleinheit weitergeleitet werden und
- die beiden Signale in der elektronischen Steuer- und Regeleinheit ausgewertet werden.

2. Verfahren nach Anspruch 1, **dadurch gekennzeichnet, dass** das digitale Signal bei einer Bremsbetätigung vorrangig ausgewertet wird, wenn im Fahrzeug kein Fahrdynamikregelungsvorgang abgewickelt wird.

3. Verfahren nach Anspruch 2, **dadurch gekennzeichnet, dass** das analoge Signal vorrangig ausgewertet wird, wenn das Sensorelement (36) eine Bremsbetätigung während eines Fahrdynamikregelungsvorganges erfasst.

4. Verfahren nach Anspruch 3, **dadurch gekennzeichnet, dass** mittels des analogen Signals die Betätigungsgeschwindigkeit des Bremspedals (43) ermittelt wird, um eine Panikbremsung des Fahrers zu erkennen und mittels der elektronischen Steuer- und Regeleinheit entsprechende Regelungsvorgänge einzusteuern.

5. Verfahren nach Anspruch 4, **dadurch gekennzeichnet, dass** mittels des analogen Signals ein theoretischer Druck in der hydraulischen Verbindung (73) ermittelt, welcher mit einem mittels eines Drucksensors (79) gemessenen Druck verglichen wird, um Lufteinschlüsse in der Bremsanlage zu erkennen.

6. Verfahren nach Anspruch 5, **dadurch gekennzeichnet, dass** eine Signalverarbeitung des analogen Signals im Sensorelement (36) erfolgt.

7. Verfahren nach Anspruch 5, **dadurch gekennzeichnet, dass** eine Signalverarbeitung des analogen Signals in der Steuer- und Regeleinheit erfolgt.

8. Vorrichtung zur Durchführung des Verfahrens nach einem der vorangegangenen Ansprüche 1 bis 7,
mit einem mittels eines Bremspedals (43) betätigbaren Hauptbremszylinder (1),
mit mindestens einer durch eine elektronische Steuer-und Regeleinheit ansteuerbaren Druckmittelfördervorrichtung (94,95), mit deren Druck Radbremsen (75,76, 77,78) des Fahrzeuges beaufschlagbar sind, die über mindestens eine mittels eines Trennventils (80,81) absperrbare hydraulische Verbindung (73,74) andererseits mit dem Hauptbremszylinder (1) verbindbar sind,
mit je einem den Radbremsen (75,76, 77,78) vorgeschalteten Einlassventil (82,83, 84,85) und einem Auslassventil (86,87, 88,89), sowie
mit einer Einrichtung zur Erkennung einer Bremsbetätigung, welche einen Magneten (35) als Signalgeber und ein Sensorelement (36) umfasst, **dadurch** gekennzeichtnet,
dass das Sensorelement (36) bei einer Kolbenbewegung des Hauptzylinders (1) eine Magnetfeldänderung erfasst und ein digitales Signal und ein analoges Signal ausgibt, wobei die beiden Signale an eine elektronische Steuer- und Regeleinheit weitergeleitet werden und die beiden Signale in der elektronischen Steuer- und Regeleinheit ausgewertet werden, und**dass** in dem Sensorelement (36) ein erster Hall-IC und ein zweiter Hall-IC vorgesehen sind, wobei der erste Hall-IC das digitale Signal und der zweite Hall-IC das analoge Signal liefert.

9. Vorrichtung nach Anspruch 8, **dadurch gekennzeichnet, dass** der Magnet (35) auf einem Kolben (3) des Hauptzylinders (1) angeordnet ist, wobei der Kolben (3) zur Anordnung des Magneten (35) einen ersten zylindrischen, zapfenförmigen Kolbenabschnitt (34) aufweist.

10. Vorrichtung nach Anspruch 9, **dadurch gekennzeichnet, dass** der Kolben (3) einen zweiten zylindrischen, zapfenförmigen Kolbenabschnitt (42) aufweist und eine ringförmige Scheibe (39) zur Positionierung des Magneten (35) und zur Abstützung einer mit dem ersten Kolben (2) verbundenen Hülse (22) auf dem zweiten zylindrischen, zapfenförmigen Abschnitt (42) vorgesehen ist.

11. Vorrichtung nach Anspruch 10, **dadurch gekennzeichnet, dass** die ringförmige Scheibe (39) mittels Umformen des zweiten zylindrischen, zapfenförmigen Kolbenabschnittes (42) auf dem zweiten zylindrischen, zapfenförmigen Abschnitt (42) befestigbar ist.

## Claims

1. Method for controlling a motor vehicle comprising an electronically controlled brake system with driving dynamics control, a master brake cylinder (1) operable by means of a brake pedal (43), at least one pressure fluid supply device (94, 95) which can be actuated by an electronic regulating and control unit and the pressure of which can be applied to wheel brakes (75, 76, 77, 78) of the vehicle, which are connectable to the master brake cylinder (1), on the other hand, by way of at least one hydraulic connection (73, 74) that is closable by means of a separating valve (80, 81), with each one inlet valve (82, 83, 84, 85) and one outlet valve (86, 87, 88, 89) connected upstream of the wheel brakes (75, 76, 77, 78), as well as with a device for detecting brake application that comprises a magnet (35) as a signal transmitter and a sensor element (36),
**characterized in that**
- the sensor element (36) upon piston movement of the master cylinder (1) senses a change in the magnetic field and outputs a digital signal and an analog signal,
- the two signals are passed on to an electronic regulating and control unit, and
- the two signals are evaluated in the electronic regulating and control unit.

2. Method as claimed in claim 1,
**characterized in that** the digital signal is evaluated with priority upon brake application, when no driving dynamics control operation is performed in the vehicle.

3. Method as claimed in claim 2,
**characterized in that** the analog signal is given priority in the evaluation when the sensor element (36) senses a brake application during a driving dynamics control operation.

4. Method as claimed in claim 3,
**characterized in that** the analog signal is used to identify the actuating speed of the brake pedal (43) in order to detect a panic stop of the driver and to trigger corresponding control operations by means of the electronic regulating and control unit.

5. Method as claimed in claim 4,
**characterized in that** the analog signal is used to establish a theoretical pressure in the hydraulic connection (73), which is compared with a pressure measured by means of a pressure sensor (79) in order to detect inclusions of air in the brake system.

6. Method as claimed in claim 5,
**characterized in that** signal processing of the analog signal takes place in the sensor element (36).

7. Method as claimed in claim 5,
**characterized in that** signal processing of the analog signal takes place in the regulating and control unit.

8. Device for implementing the method as claimed in any one of the preceding claims 1 to 7,
comprising a master brake cylinder (1) operable by means of a brake pedal (43), at least one pressure fluid supply device (94, 95) which can be actuated by an electronic regulating and control unit and the pressure of which can be applied to wheel brakes (75, 76, 77, 78) of the vehicle, which are connectable to the master brake cylinder (1), on the other hand, by way of at least one hydraulic connection (73, 74) that is closable by means of a separating valve (80, 81), with each one inlet valve (82, 83, 84, 85) and one outlet valve (86, 87, 88, 89) connected upstream of the wheel brakes (75, 76, 77, 78), as well as with a device for detecting brake application that comprises a magnet (35) as a signal transmitter and a sensor element (36),
**characterized in that** the sensor element (36) upon piston movement of the master cylinder (1) senses a change in the magnetic field and outputs a digital signal and an analog signal, and the two signals are passed on to an electronic regulating and control unit, and the two signals are evaluated in the electronic regulating and control unit, and **in that** a first Hall-IC and a second Hall-IC are provided in the sensor element (36), with the first Hall-IC furnishing the digital signal, while the second Hall-IC furnishes the analog signal.

9. Device as claimed in claim 8,
**characterized in that** the magnet (35) is arranged on a piston (3) of the master cylinder (1), and the piston (3) includes a first cylindrical peg-shaped piston portion (34) for the arrangement of the magnet (35).

10. Device as claimed in claim 9,
**characterized in that** the piston (3) includes a second cylindrical peg-shaped piston portion (42) and an annular plate (39) for positioning the magnet (35) and for supporting a sleeve (22) that is connected to the first piston (2) on the second cylindrical peg-shaped portion (42).

11. Device as claimed in claim 10,
**characterized in that** the annular plate (39) can be fastened on the second cylindrical peg-shaped portion (42) by means of reshaping the second cylindrical peg-shaped portion (42).

## Revendications

1. Procédé de régulation d'un véhicule automobile comportant un système de freinage à régulation électronique avec régulation dynamique de la trajectoire, un cylindre de frein principal (1) pouvant être actionné avec une pédale de frein (43), au moins un dispositif d'acheminement d'un fluide de pression (94, 95) pouvant être commandé par une unité de commande et de régulation électronique et avec la pression duquel les freins de roue (75, 76, 77, 78) du véhicule peuvent être alimentés, pouvant être reliés au cylindre de frein principal (1) par au moins une liaison hydraulique (73, 74) pouvant être fermée au moyen d'une valve d'isolement (80, 81) d'autre part, comportant chacun une soupape d'admission (82, 83, 84, 85) en amont des freins de roue (75, 76, 77, 78) et une soupape d'échappement (86, 87, 88, 89), ainsi qu'un dispositif de détection d'un actionnement du frein qui comporte un aimant (35) en tant que transmetteur de signaux et un capteur (36), **caractérisé en ce que**
- le capteur (36) détecte une modification du champ magnétique lors d'un mouvement du piston du cylindre principal (1) et émet un signal numérique et un signal analogique,
- les deux signaux sont retransmis à une unité électronique de commande et de régulation et
- les deux signaux sont analysés dans l'unité électronique de commande et de régulation.

2. Procédé selon la revendication 1, **caractérisé en ce que** le signal numérique est analysé en priorité lors d'un actionnement de la pédale de frein si aucun processus de régulation dynamique de la trajectoire n'est opéré dans le véhicule.

3. Procédé selon la revendication 2, **caractérisé en ce que** le signal analogique est analysé en priorité lorsque le capteur (36) détecte un actionnement de la pédale de frein pendant un processus de régulation dynamique de la trajectoire.

4. Procédé selon la revendication 3, **caractérisé en ce que** au moyen du signal analogique la vitesse d'actionnement de la pédale de frein (43) est déterminée afin de détecter un freinage brusque du conducteur et initier des processus de contrôle correspondants au moyen de l'unité électronique de commande et de régulation.

5. Procédé selon la revendication 4, **caractérisé en ce qu'**au moyen du signal analogique permet de déterminer une pression théorique dans la liaison hydraulique (73) est déterminée qui est comparée à une pression mesurée au moyen d'un capteur de pression (79) afin de détecter des inclusions d'air dans le système de freinage.

6. Procédé selon la revendication 5, **caractérisé en ce que** le signal analogique est traité dans le capteur (36).

7. Procédé selon la revendication 5, **caractérisé en ce que** le signal analogique est traité dans l'unité de commande et de régulation.

8. Dispositif pour la réalisation du procédé selon l'une quelconque des revendications 1 à 7 précédentes, comportant un cylindre de frein principal (1) pouvant être actionné avec une pédale de frein (43), au moins un dispositif d'acheminement d'un fluide de pression (94, 95) pouvant être commandé par une unité électronique de commande et de régulation et avec la pression duquel les freins de roue (75, 76, 77, 78) du véhicule peuvent être alimentés, pouvant être reliés au cylindre de frein principal (1) par au moins une liaison hydraulique (73, 74) pouvant être fermée au moyen d'une valve d'isolement (80, 81) d'autre part, comportant chacun une soupape d'admission (82, 83, 84, 85) en amont des freins de roue (75, 76, 77, 78) et une soupape d'échappement, ainsi qu'un dispositif de détection d'un actionnement du frein qui comporte un aimant (35) en tant que transmetteur de signaux et un capteur (36), **caractérisé en ce que** le capteur (36) détecte une modification du champ magnétique lors d'un mouvement du piston du cylindre principal (1) et émet un signal numérique et un signal analogique, les deux signaux sont retransmis à une unité électronique de commande et de régulation et les deux signaux étant analysés dans l'unité électronique de commande et de régulation, on prévoit, dans le capteur (36) un premier IC à effet Hall et un deuxième IC à effet Hall, le premier IC à effet Hall fournissant le signal numérique et le deuxième IC à effet Hall le signal analogique.

9. Dispositif selon la revendication 8, **caractérisé en ce que** l'aimant (35) est disposé sur un piston (3) du cylindre principal (1), le piston (3) présentant un premier tronçon cylindrique (34) en forme de goujon pour disposer l'aimant (35).

10. Dispositif selon la revendication 9, **caractérisé en ce que** le piston (3) présente un deuxième tronçon cylindrique (42) en forme de goujon et on prévoit une rondelle annulaire (39) pour positionner l'aimant (35) et pour soutenir un manchon (22) relié au premier piston (2) sur le deuxième tronçon cylindrique (42) en forme de goujon.

11. Dispositif selon la revendication 10, **caractérisé en ce que** la rondelle annulaire (39) est fixée sur le deuxième tronçon cylindrique (42) en forme de goujon par déformation du deuxième tronçon cylindrique (42) en forme de goujon.
